# EUROPÄISCHE PATENTANMELDUNG

(11) **EP 2 607 332 A1**
(43) Veröffentlichungstag der Anmeldung: **26.06.2013**
(21) Anmeldenummer: 11194294.2
(22) Anmeldetag: 19.12.2011
(51) Int. Cl.: C04B 28/14, C04B 40/00, C04B 28/16

(54) **Abbindebeschleuniger für Bindemittel auf Basis von Calciumsulfat**

(71) Anmelder: Sika Technology AG, 6340 Baar (CH)
(72) Erfinder: Müller, Markus, 5621 Zufikon (CH); Müller, Thomas, 69115 Heidelberg (CH)
(74) Vertreter: Sika Patent Attorneys

(57) **Zusammenfassung**

Die vorliegende Erfindung betrifft ein Verfahren zur Herstellung eines Abbindebeschleunigers, insbesondere für Bindemittel auf Basis von Calciumsulfat, welches sich dadurch auszeichnet, dass Gips zusammen mit wenigstens einem Polycarboxylat einer Trockenmahlung unterzogen wird.

## Beschreibung

### Technisches Gebiet

Die Erfindung betrifft ein Verfahren zur Herstellung eines Abbindebeschleunigers, insbesondere für Bindemittel auf Basis von Calciumsulfat. Weiter bezieht sich die Erfindung auf einen derart hergestellten Abbindebeschleuniger sowie eine Verwendung des Abbindebeschleunigers. Weitere Gegenstände der Erfindung betreffen eine Bindemittelzusammensetzung umfassend den Abbindebeschleuniger sowie einen Formkörper enthaltend eine ausgehärtete Bindemittelzusammensetzung.

### Stand der Technik

Bei der Verarbeitung von Bindemitteln auf Basis von Calciumsulfat werden häufig abbindebeschleunigende Zusätze oder Abbindebeschleuniger eingesetzt. Dadurch können die Abbindezeiten der Bindemittel stark reduziert werden, was beispielsweise bei der grosstechnischen Produktion von Gipsplatten einen entscheidenden Vorteil darstellt.

Ein besonders effektiver Abbindebeschleuniger für Bindemittel auf Basis von Calciumsulfat ist fein gemahlener Gips bzw. Calciumsulfatdihydrat (CaSO₄ · 2 H₂O). Gips wirkt dabei insbesondere als Impfkristall, welcher die Hydratation des im Bindemittel vorliegenden Calciumsulfathalbhydrats und/oder Anhydrits beschleunigt.

Bei der Herstellung derartiger Abbindebeschleuniger werden dem Gips bei der Herstellung häufig Additive, wie z.B. Stärke, Zucker oder Dextrine zugegeben. Diese Additive dienen insbesondere dazu, den Mahlvorgang des Gipses zu fördern oder die Eigenschaften des Gipses nach der Mahlung zu beeinflussen. Konkret erleichtern Additive z.B. das Zerkleinern des Gipses in Mühlen und verhindern die Agglomeration der resultierenden Feinstpartikel. Andere Additive erhöhen stattdessen die abbindebeschleunigende Wirkung oder Stabilität des Gipses nach der Mahlung.

Die US 4,298,394 beschreibt in diesem Zusammenhang beispielsweise die Verwendung von bis zu 20 Gew.-% einer oberflächenaktiven Substanz als Additiv beim Mahlen von Gips. Konkret erwähnt sind z.B. Natriumalkylat-Sulphonat, Natriumlaurylsulfat oder ethoxyliertes Nonylphenol. Die Verwendung dieser Additive bringt insbesondere eine verbesserte Lagerstabilität und verstärkte Abbindebeschleunigung mit sich.

Viele der bekannten Additive und Herstellverfahren für Abbindebschleuniger auf Basis von Gips vermögen aber nicht vollständig zu überzeugen: Häufig werden ausschliesslich entweder der Mahlvorgang oder die Gipseigenschaften, insbesondere die abbindebeschleunigende Wirkung, verbessert. Eine Verbesserung im Bereich des Mahlvorgangs geht somit zu Lasten der abbindebeschleunigenden Wirkung und umgekehrt. Andere Verfahren und Additive sind aus ökonomischer Sicht nachteilig oder aufwändig in der technischen Umsetzung.

Es besteht daher nach wie vor Bedarf nach neuen und alternativen Lösungen, welche die vorstehend genannten Nachteile nicht aufweisen.

### Darstellung der Erfindung

Aufgabe der Erfindung ist es daher, ein Verfahren bereit zu stellen, welches die Herstellung eines Abbindebeschleunigers für Bindemittel auf Basis von Calciumsulfat ermöglicht. Das Verfahren soll insbesondere möglichst effizient und/oder wirtschaftlich sein und die Herstellung eines möglichst wirksamen Abbindebeschleunigers ermöglichen. Zudem soll ein Abbindebeschleuniger geschaffen werden, welcher möglichst effizient und/oder wirtschaftlich herstellbar ist und im Vergleich mit bekannten Abbindebeschleunigern eine vergleichbare oder verbesserte Wirkung zeigt. Des Weiteren soll der Abbindebeschleuniger insbesondere die Verarbeitbarkeit von Bindemittel auf Basis von Calciumsulfat nicht nennenswert beeinträchtigen.

Überraschenderweise wurde gefunden, dass die erfindungsgemässe Aufgabe im Hinblick auf das Verfahren gemäss Anspruch 1 gelöst wird.

Das erfindungsgemässe Verfahren zeichnet sich dadurch aus, dass zur Herstellung eines Abbindebeschleunigers, insbesondere für Bindemittel auf Basis von Calciumsulfat, Gips zusammen mit einem Polycarboxylat einer Trockenmahlung unterzogen wird.

Die Aufgabe bezüglich des Abbindebeschleunigers wird entsprechend durch die Merkmale des Anspruchs 10 gelöst.

Wie sich bei Mahlversuchen gezeigt hat, kommt es durch die Verwendung von Polycarboxylaten als Additiv beim Trockenmahlen von Gips im Vergleich mit einer Blindprobe ohne Additiv zu signifikant weniger Anbackungen oder Verklebungen an den Mahlkörpern. Dadurch kann der Mühlendurchsatz oder die pro Zeit umgesetzte Menge an Gips bei gleichbleibender Mühleleistung signifikant erhöht werden. Daraus resultierend kann der Aufwand für die Reinigung der Mühle reduziert werden, was wiederum den Verschleiss der Mühle oder der Mahlkörper verringert. Zudem besteht die Möglichkeit, bei Verwendung der Polycarboxylate eine höhere Feinheit des Mahlgutes zu erzielen. Die im Verfahren als Additive eingesetzten Polycarboxylate sind darüber hinaus weltweit kostengünstig verfügbar und im vorliegenden Zusammenhang bereits in geringen Mengen wirksam. Insgesamt resultiert also ein neuartiges, effizientes und wirtschaftliches Verfahren zur Herstellung eines Abbindebeschleunigers für Bindemittel auf Basis von Calciumsulfat.

Die so hergestellten Abbindebeschleuniger zeichnen sich insbesondere durch eine sehr gute Beschleunigerwirkung in Bindemitteln auf Basis von Calciumsulfat aus. Mit anderen Worten lässt sich sowohl die Zeit bis zum Abbindebeginn und als auch die Zeit bis zum Abbindeende mit den erfindungsgemässen Abbindebeschleunigern signifikant verkürzen.

Die erfindungsgemässen Abbindebeschleuniger beeinträchtigen dabei die Fliessfähigkeit der Bindemittel auf Basis von Calciumsulfat kaum oder gar nicht. Dies zeigt sich insbesondere darin, dass die Fliessfähigkeit oder das Ausbreitmass gegenüber einer Blindprobe ohne Abbindebeschleuniger nur unwesentlich abnimmt, wobei diese Abnahme eine Begleiterscheinung der verstärkten abbindebeschleunigenden Wirkung ist. Die Verarbeitbarkeit der Bindemittel bleibt also erhalten.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Ein erster Aspekt der vorliegenden Erfindung betrifft ein Verfahren zur Herstellung eines Abbindebeschleunigers, insbesondere für Bindemittel auf Basis von Calciumsulfat, wobei Gips zusammen mit wenigstens einem Polycarboxylat einer Trockenmahlung unterzogen wird.

Unter "Abbinden" wird im Folgenden die Verfestigung eines mit Wasser angemachten Bindemittels verstanden. Die Verfestigung umfasst dabei das Versteifen des Bindemittels (Übergang von fluidem Zustand in festen Zustand) sowie den nachfolgenden Erhärtungsvorgang (weitere Zunahme der mechanischen Festigkeit der das Bindemittel enthaltenden Matrix).

Der Ausdruck "Abbindebeschleuniger" steht vorliegend für eine Substanz, welche, falls einem Bindemittel zugegeben, die Zeit bis zum Abbindebeginn oder Versteifungsbeginn des Bindemittels zeitlich verkürzt. Dies im Vergleich mit einem entsprechenden Bindemittel ohne zugegebenen Abbindebeschleuniger.

Der Ausdruck "Bindemittel" steht im Besonderen für ein anorganisches Bindemittel, welches in Anwesenheit von Wasser in einer Hydratationsreaktion zu festen Hydraten oder Hydratphasen reagiert.

Mit einem "Bindemittel auf Basis von Calciumsulfat" ist insbesondere ein Bindemittel umfassend Calciumsulfathalbhydrat und/oder Anhydrit gemeint. Calciumsulfathalbhydrat oder CaSO₄ · 0.5 H₂O kann dabei als a-Halbhydrat oder β-Halbyhdrat vorliegen. Ebenso kann Anhydrit als Anhydrit II oder Anhydrit III vorliegen. Calciumsulfathalbhydrat und/oder Anhydrit verfügen von allen im Bindemittel enthaltenen Komponenten insbesondere über den grössten Gewichtsanteil. Bevorzugt besteht das Bindemittel auf Basis von Calciumsulfat zu wenigstens 25 Gew.-%, insbesondere wenigstens 50 Gew.-%, bevorzugt wenigstens 75 Gew.-%, weiter bevorzugt wenigstens 90 Gew.-%, aus Calciumsulfathalbhydrat und/oder Anhydrit. Im Besonderen besteht das Bindemittel auf Basis von Calciumsulfat bis auf unvermeidbare Verunreinigungen ausschliesslich aus Calciumsulfathalbhydrat und/oder Anhydrit. Vorteilhaft ist das Bindemittel auf Basis von Calciumsulfat eine Mischung von β-Halbhydrat mit geringen Anteilen an Anhydrit III. Derartige Bindemittel sind auch unter dem Begriff "Stuckgips" bekannt.

Mit "Gips" ist vorliegend Calciumsulfatdihydrat oder CaSO₄. 2 H₂O gemeint.

Unter einem "Polycarboxylat" wird im Rahmen dieser Schrift ein Polymer umfassen oder bestehend aus wenigstens zwei Monomereinheiten, welche über jeweils wenigstens eine Carboxylgruppe verfügen, verstanden. Die Carboxylgruppe kann als reine Carboxylgruppe oder als Carboxylat vorliegen. Weiterhin kann z.B. jede Carboxylgruppe und/oder jedes Carboxylat unabhängig von den anderen mit einem Alkohol und/oder Thiol verestert worden sein und/oder als Säureamid vorliegen. Bevorzugt umfasst oder besteht das Polycarboxylat aus wenigstens 3, insbesondere wenigstens 5, besonders bevorzugt 20 - 70, Monomereinheiten. Grundsätzlich können auch Mischungen aus mehreren unterschiedlichen Polycarboxylaten verwendet werden.

Mit dem Begriff "Mahlen" oder "Mahlvorgang" wird insbesondere ein Verfahren verstanden, bei welchem eine mittlere Korngrösse eines Feststoffs oder eines Gemischs von verschiedenen Feststoffen reduziert wird. Typischerweise wird der Feststoff oder das Gemisch von verschiedenen Feststoffen, insbesondere ein Bindemittel, beim Mahlen auf einen Blaine-Wert von wenigstens 500 cm²/g, insbesondere wenigstens 1'000 cm²/g, bevorzugt wenigstens 2'000 cm²/g, noch weiter bevorzugt wenigstens 4'000 cm²/g, gemahlen. Der zu mahlende Feststoff wird auch als "Mahlgut" bezeichnet.

Unter "Trockenmahlen" wird dabei ein Mahlvorgang verstanden, bei welchem dem Mahlgut bzw. dem Gips vor oder während dem Mahlen keine flüssigen Zusätze, insbesondere keine wasserhaltigen Zusätze, beigegeben werden. Anders ausgedrückt werden dem Mahlgut vor oder während dem Mahlvorgang insbesondere ausschliesslich Feststoffe, z.B. in Pulverform, beigegeben. Der Trockenmahlvorgang ist demnach ein Mahlvorgang, welcher im Wesentlichen in Abwesenheit von flüssigen Substanzen oder flüssigen Additiven erfolgt. Die Aggregatzustände "flüssig" und "fest" beziehen sich dabei insbesondere auf Standardbedingungen, speziell eine Temperatur von 0ºC und einen Druck von 1.01325 bar. Bevorzugt werden beim Trockenmahlen ausschliesslich Substanzen oder Materialen eingesetzt, welche bei einer Temperatur von 25ºC, insbesondere 40ºC, bevorzugt 45ºC, und einem Druck von 1.01325 bar in festem Aggregatzustand vorliegen.

Ein Flüssigkeitsanteil, insbesondere ein Wasseranteil, der beim Trockenmahlen eingesetzten Substanzen ist im Besonderen geringer als 1 Gew.-%, bevorzugt geringer als 0.05 Gew.-%, weiter bevorzugt geringer als 0.001 Gew.-%, jeweils bezogen auf die Menge der einzelnen eingesetzten Substanz. Der Flüssigkeitsanteil bezieht sich dabei auf freie Flüssigkeiten. Das im Gips vorhandene Kristallwasser wird insbesondere nicht als Flüssigkeit betrachtet.

Gemäss einer vorteilhaften Ausführungsform wird der Gips auf eine spezifische Oberfläche (nach Blaine) von wenigstens 2'500 g/cm², insbesondere wenigstens 5'000 g/cm², bevorzugt wenigstens 6'000 g/cm² oder 7'000 g/cm², gemahlen.

Zur Bewertung des Mahlproduktes wird neben der spezifischen Oberfläche die Partikelgrösse bei 50 Masse-% Durchgang, der sogenannte Medianwert d⁵⁰, herangezogen. Die d⁵⁰-Werte lassen sich z.B. mittels Lichtstreuung an den Partikeln einer Pulverprobe bestimmen. Entsprechende Messmethoden sind dem Fachmann an sich bekannt und beispielsweise in Norm ISO 13320:2009 näher beschrieben.

Mit Vorteil wird der Gips während der Trockenmahlung hochfein gemahlen, insbesondere so dass ein d⁵⁰-Wert im Bereich ≤ 100 µm, insbesondere kleiner ≤ 70 µm, bevorzugt kleiner ≤ 40 µm, ist.

Das Polycarboxylat wird bevorzugt mit einem Anteil von 0.05 - 10 Gew.-%, insbesondere 0.05 - 2 Gew.-%, speziell 0.2 - 1 Gew.-% eingesetzt. Dadurch kommen einerseits die erfindungsgemässen Effekte optimal zum Tragen. Andererseits sind derartige Dosierungen aus ökonomischer Sicht vorteilhaft.

Das Polycarboxylat ist insbesondere ein Polycarboxylat in festem Aggregatzustand. Dieses kann z.B. in Form von Platten, Scheiben, Flocken, Schuppen, Pellets, als Granulat und/oder als Pulver vorliegen. Bevorzugt ist das Polycarboxylat pulverförmig. Damit wird eine besonders effektive Vermischung mit dem Mahlgut bzw. dem Gips während der Trockenmahlung erreicht. Ein Flüssigkeitsanteil, insbesondere ein Wasseranteil, im Polycarboxylat ist bevorzugt ≤ 5 Gew.-%, insbesondere ≤ 1 Gew.-%, bevorzugt ≤ 0.1 Gew.-%.

Insbesondere ist das Polycarboxylat ein Kammpolymer, welches über ein Polycarboxylatrückgrat und Polyetherseitenketten verfügt. Die Polyetherseitenketten sind dabei insbesondere über Ester-, Thioester-, Ether- und/oder Amidgruppen an das Polycarboxylatrückgrat gebunden.

Besonders bevorzugt sind Polycarboxylate oder Kammpolymere, welche folgende Teilstruktureinheiten umfassen oder daraus bestehen:
a) a Molanteile einer Teilstruktureinheit **S1** der Formel (I) 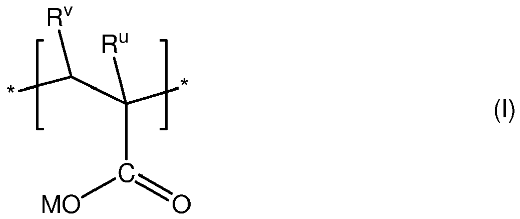
b) b Molanteilen einer Teilstruktureinheit **S2** der Formel (II) 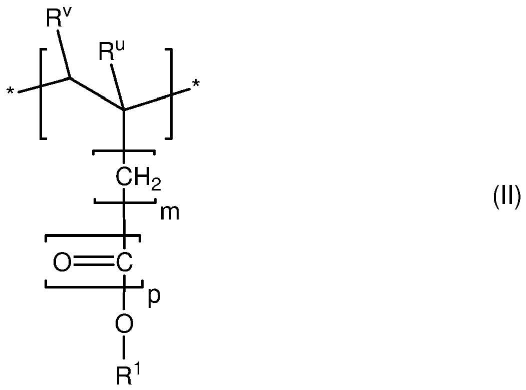
c) c Molanteilen einer Teilstruktureinheit **S3** der Formel (III) 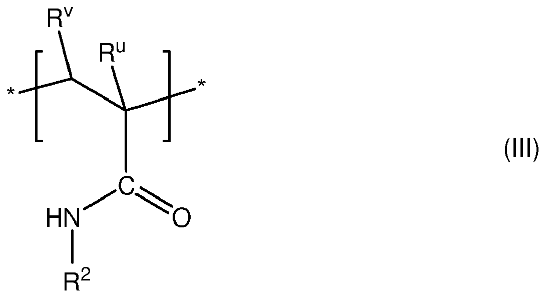
d) d Molanteilen einer Teilstruktureinheit **S4** der Formel (IV) 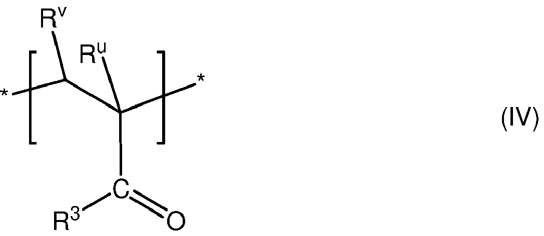
wobei
M unabhängig voneinander H⁺, ein Alkalimetallion, Erdalkalimetallion, ein zwei oder dreiwertiges Metallion, ein Ammoniumion oder eine organische Ammoniumgruppe darstellt, jedes R^{u} unabhängig von den anderen für Wasserstoff oder eine Methylgruppe steht,
jedes R^{v} unabhängig von den anderen für Wasserstoff oder COOM steht,
m = 0, 1 oder 2,
p = 0 oder 1,
R¹ und R² unabhängig voneinander für eine C₁- bis C₂₀-Alkylgruppe, -Cycloalkylgruppe, -Alkylarylgruppe oder für -[AO]ₙ-R⁴ steht,
wobei A = C₂- bis C₄-Alkylen, R⁴ für H, eine C₁- bis C₂₀-Alkylgruppe, -Cyclohexylgruppe oder -Alkylarylgruppe steht,
und n = 2 - 250,
R³ unabhängig voneinander für NH₂, -NR⁵R⁶, -OR⁷NR⁸R⁹ stehen,
wobei R⁵ und R⁶ unabhängig voneinander für
eine C₁- bis C₂₀-Alkylgruppe, -Cycloalkylgruppe -Alkylaryl¬gruppe oder -Arylgruppe stehen,
oder für eine Hydroxyalkylgruppe oder für eine Acetoxyethyl- (CH₃-CO-O-CH₂-CH₂-) oder eine Hydroxy-isopropyl-(HO-CH(CH₃)-CH₂-) oder eine Acetoxyisopropylgruppe (CH₃-CO-O-CH(CH₃)-CH₂-) stehen;
oder R⁵ und R⁶ bilden zusammen einen Ring, von dem der Stickstoff ein Teil ist, um einen Morpholin- oder Imidazolinring aufzubauen;
R⁷ eine C₂-C₄-Alkylengruppe ist,
R⁸ und R⁹ je unabhängig voneinander eine C₁- bis C₂₀-Alkylgruppe, -Cycloalkylgruppe, -Alkylarygruppe, -Arylgruppe oder eine Hydroxyalkylgruppe darstellen,
und wobei a, b, c und d Molanteile der jeweiligen Teilstruktureinheiten **S1, S2, S3** und **S4** darstellen, mit
a/b/c/d = (0.1 - 0.9) / (0.1 - 0.9) / (0 - 0.8) / (0 - 0.8),
insbesondere a/b/c/d = (0.3 - 0.9) / (0.1 - 0.7) / (0 - 0.6) / (0 - 0.4),
bevorzugt a/b/c/d = (0.5 - 0.9) / (0.1 - 0.3) / (0.001 - 0.005) / 0 und der Massgabe dass a + b + c + d = 1 ist.

Bevorzugt weisen die Teilstruktureinheiten **S1, S2, S3,** und **S4** zusammen einen Gewichtsanteil von wenigstens 50 Gew.-%, insbesondere wenigstens 90 Gew.-%, ganz besonders bevorzugt wenigstens 95 Gew.-%, am Gesamtsgewicht des Kammpolymers auf. Ebenfalls bevorzugt beträgt eine Gesamtzahl der in den Teilstruktureinheiten **S1, S2, S3** und **S4** zusammen vorliegenden Atome wenigstens 50 %, insbesondere wenigstens 90 %, ganz besonders bevorzugt wenigstens 95 %, aller im Kammpolymer vorliegender Atome.

Besonders geeignete Polycarboxylate bzw. Kammpolymere verfügen dabei über eines oder mehrere der nachfolgenden Merkmale:
a) die Reste R^{u} und R^{v} stehen für Wasserstoff
   und/oder
b) m = 0
   und/oder
c) p = 1
   und/oder
d) R¹, R² und R³ stehen jeweils unabhängig voneinander, für -[AO]ₙ-R⁴ mit n = 20 - 70
   und/oder
e) R⁴ stellt eine Methylgruppe dar.

Gemäss einer bevorzugten Ausführungsform sind im Polycarboxylat sämtliche Merkmale a) - e) verwirklicht.

Ein gewichtsgemitteltes Molekulargewicht (M_{w}) des Polycarboxylats oder Kammpolymers beträgt insbesondere 5'000 - 150'000 g/mol, im Speziellen 10'000 - 100'000 g/mol.

Ein Schmelzpunkt oder eine Untergrenze des Schmelzbereichs des Polycarboxylats liegt mit Vorteil bei wenigstens 25ºC, insbesondere 40ºC, weiter bevorzugt 45ºC.

Die Herstellung der vorstehend genannten Polycarboxylate oder Kammpolymere ist dem Fachmann an sich bekannt und kann beispielsweise durch radikalische Polymerisation der entsprechenden Monomere der Formel (Iₘ), (IIₘ), (IIIₘ) bzw. (IVₘ) erfolgen, was zu einem Kammpolymer mit den Teilsstruktureinheiten **S1, S2, S3** und **S4** führt. Die Reste R^{u}, R^{v}, R¹, R², R³, M, m und p sind dabei wie vorstehend beschreiben definiert.

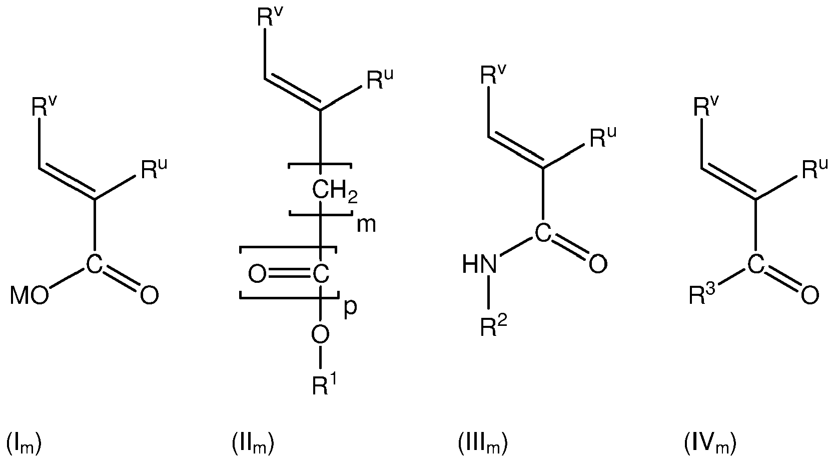

Ebenfalls möglich ist die Herstellung der Kammpolymere **KP** durch polymeranaloge Umsetzung einer Polycarbonsäure der Formel (V).

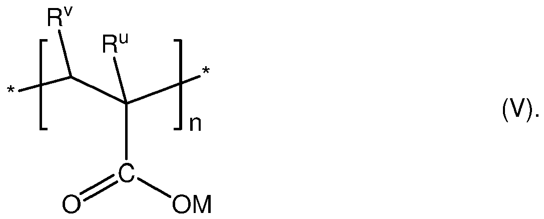

Bei der polymer-analogen Umsetzung wird die Polycarbonsäure der Formel (V) mit den korrespondierenden Alkoholen oder Aminen (z.B. HO-R¹, H₂N-R², H-R³) verestert bzw. amidiert und dann allenfalls neutralisiert oder teilneutralisiert (je nach Art des Rests M z.B. mit Metallhydroxiden oder Ammoniak). Details zur polymer-analogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen den Beispielen. In einer Abart davon, wie sie in EP 1 348 729 A1 auf Seite 3 bis Seite 5 sowie in dessen Beispielen (z.B. Absätze 0032 und 0037) beschrieben sind, kann das Kammpolymer in festem Aggregatzustand hergestellt werden. Die Offenbarung dieser genannten Patentschriften wird hiermit insbesondere durch Bezugnahme eingeschlossen.

Derartige Kammpolymere werden auch von Sika Schweiz AG unter der Handelsnamenreihe ViscoCrete® kommerziell vertrieben.

Gemäss einer vorteilhaften Ausführungsform kann wenigstens eine zusätzliche Mahlzugabe eingesetzt werden. Bevorzugt umfasst die das zusätzliche Mahlhilfsmittel Zucker, Stärke, Quarzsand und/oder Dolomit. Dadurch kann die Wirkung des Polycarboxylats unter Umständen verbessert werden oder der Anteil des Polycarboxylats kann reduziert werden. Letzteres kann insbesondere aus ökonomischen Gründen Vorteile mit sich bringen.

Bevorzugt erfolgt die Trockenmahlung in einer Mahlkörpermühle, insbesondere einer Kugelmühle. Bei Mahlkörpermühlen werden ein oder mehrere Mahlkörper und das Mahlgut in einem Behälter lose angeordnet und gegeneinander bewegt. Dies kann z.B. durch Vibration des Behälters erreicht werden. Dadurch kommt es zu Stössen zwischen den Mahlkörpern und dem Mahlgut, wodurch dieses mechanisch zerkleinert wird. Die Zerkleinerung des Mahlguts erfolgt dabei insbesondere durch Prall- und Stossbeanspruchung Dabei kommt es neben der Zerkleinerung des Mahlguts auch zu stofflichen Veränderungen und Störungen in den Kristallgittern der Mahlgutpartikel. Beispielsweise können Oberflächenneubildungen, Amorphisierungen, Phasenumwandlungen, Versetzungsbildung hervorgerufen werden. Dies ist im vorliegenden Fall wünschenswert, da derartig modifizierte Gipspartikel als Abbindebeschleuniger im Allgemeinen wirksamer sind.

In einem weiteren Aspekt bezieht sich die vorliegende Erfindung auf einen Abbindebeschleuniger, insbesondere für Bindemittel auf Basis von Calciumsulfat, welcher erhältlich ist durch ein wie vorstehend beschriebenes Verfahren. Der Abbindebeschleuniger ist mit anderen Worten dadurch erhältlich, dass Gips zusammen mit wenigstens einem Polycarboxylat einer Trockenmahlung unterzogen wird. In bevorzugten Ausführungsformen werden dabei die bereits vorstehend im Zusammenhang mit dem Verfahren erwähnten optionalen Merkmale verwirklicht.

Wie sich in Versuchen gezeigt hat, unterscheiden sich derartige durch eine Trockenmahlung hergestellte Abbindebeschleuniger bezüglich Struktur und Eigenschaften von entsprechenden durch eine Nassmahlung hergestellten Abbindebeschleunigern. Dies dürfte unter anderem darauf zurückzuführen sein, dass Kleinstpartikel im Nanometerbereich durch die in der Nassmahlung vorliegende Flüssigkeit bevorzugt gelöst werden und im Abbindebeschleuniger in geringeren Mengen oder gar nicht mehr vorhanden sind. Dies im Gegensatz zur Herstellung des Abbindebeschleunigers mittels Trockenmahlung, bei welcher diese Problematik aufgrund der nicht vorhandenen Flüssigkeit nicht auftritt. Gerade die Kleinstpartikel im Nanometerbereich sind jedoch äusserst effektive Kristallisationskeime in Bindemitteln auf Basis von Calciumsulfat. Fehlen diese Kristallisationskeime oder ist deren Konzentration vermindert, resultiert eine geringere Abbindebeschleunigung.

Der Abbindebeschleuniger kann in Reinform oder zusammen mit wenigstens einem weiteren Additiv eingesetzt werden. Beispielsweise ist es möglich, den Abbindebeschleuniger zusammen mit dem wenigstens einen weiteren Additiv abzumischen und als Zusatzmittelzusammensetzung einzusetzen. Hierfür kann das wenigstens eine weitere Additiv beispielsweise nach dem Herstellen des Abbindebeschleunigers oder nach dem Trockenmahlvorgang mit diesem vermischt werden.

Als Additiv kann z.B. ein Fliessmittel, insbesondere ein Polycarboxylat, speziell ein Polycarboxylatether, eingesetzt werden. Das Polycarboxylat ist dabei insbesondere wie vorstehend definiert und kann die Fliesseigenschaften von Bindemitteln auf Basis von Calciumsulfat verbessern. Das als Additiv zugegebene Polycarboxylat kann dabei verschieden oder gleich sein wie das im Trockenmahlprozess eingesetzte Polycarboxylat.

In einem weiteren Aspekt betrifft die vorliegende Erfindung die Verwendung eines wie vorstehend beschriebenen Abbindebeschleunigers zur Beschleunigung des Abbindens eines Bindemittels auf Basis von Calciumsulfat.

Besonders vorteilhaft erfolgt die Verwendung bei der Herstellung von Gipsplatten. Aufgrund der starken abbindebeschleunigenden Wirkung lässt sich die Produktionsgeschwindigkeit bei der industriellen Fertigung von Gipsplatten signifikant erhöhen.

Weiter betrifft die Erfindung eine Bindemittelzusammensetzung enthaltend ein Bindemittel auf Basis von Calciumsulfat, insbesondere Stuckgips, sowie einen wie vorstehend beschriebenen Abbindebeschleuniger.

Der Abbindebeschleuniger liegt dabei insbesondere mit einem Anteil von 0.0005 - 5 Gew.-%, insbesondere 0.01 - 1 Gew.-%, bezogen auf das Bindemittel vor.

Insbesondere enthält die Bindemittelzusammensetzung zusätzlich Wasser, wobei ein Gewichtsverhältnis von Wasser zu Bindemittel bevorzugt im Bereich von 0.2 - 1 insbesondere 0.4 - 0.8, bevorzugt 0.5 - 0.7, liegt. Derartige Bindemittelzusammensetzungen lassen sich z.B. zur Herstellung von Gipsplatten verwenden.

In einem weiteren Aspekt betrifft die Erfindung einen Formkörper enthaltend eine wie vorstehend beschrieben ausgehärtete Bindemittelzusammensetzung. Solche Formkörper sind erhältlich durch Aushärten einer wie vorstehend beschriebenen Bindemittelzusammensetzung nach Zugabe von Wasser. Der Formkörper kann dabei nahezu jede beliebige Form aufweisen und beispielsweise in Form einer Gipsplatte vorliegen.

### Ausführungsbeispiele

### 1. Herstellung von Polycarboxylaten

### 1.1 Kammpolymer KP1

In einem 1500 ml Reaktionsgefäss, ausgestattet mit einem mechanischem Rührwerk, Temperaturüberwachung, Heizpilz und Vakuumpumpe, werden 290 g (ca. 2 mol COOH) einer wässrigen Polyacrylsäure mit mittleren Molekulargewicht von 4000 - 6000, vorgelegt. Dazu werden 600 g Methylpolyäthylenglycol (MPEG 3000 der Firma Ineos), sowie 100 g Methylpolyäthylenglycol (MPEG 1000er Firma Ineos) zugegeben. Weiter werden 0.3 g Entschäumer und 0.3 g Rhenofit DDA unter Rühren zugegeben. Das Reaktionsgemisch wird auf 175°C erwärmt, wobei das Wasser abdestilliert wird. Nach 30-minütigem Rühren bei dieser Temperatur werden zum Reaktionsgemisch eine Mischung bestehend aus 5 g Jeffamin M2070 und 4 g 50%ige Natronlauge vorsichtig zugegeben. Sobald das Reaktionsgemisch wieder 175°C erreicht hat, wird die Reaktion bei einem Unterdruck von 80 mbar bis zum gewünschten Umsatz durchgeführt, was ca. 2 Stunden benötigt. Mittels UPLC (Ultra Performance Liquid Chromatography) wird dann in an sich bekannter Weise der MPEG- sowie der Polymergehalt gemessen. Es konnte so ein Polymeranteil von ca. 95% und ein verbleibender MPEG Anteil von ca. 5% gemessen werden. Die Schmelze wird danach aus dem Reaktor auf ein Blech gegossen wo die helle Masse erstarrt. Die erstarrte Masse wird danach zu einem weissen Pulver gemahlen. Das so erhaltene pulverförmige Kammpolymer wird mit **KP1** bezeichnet. Schmelzbereich: 50 - 55ºC. a/b/c/d = 0.856/0.142/0.002/0. Molekulargewicht (M_{w}) = 29'000 g/mol.

Das reine Kammpolymer **KP1** wird im Folgenden auch als Additiv **A1** bezeichnet.

### 1.2 Kammpolymer KP2

Ein weiteres Kammpolymer **KP2** wird im Wesentlichen wie Kammpolymer **KP1** hergestellt. Die Polymerschmelze wird jedoch nicht zu einem Pulver verarbeitet sondern stattdessen mit Wasser vermischt (Polymeranteil 40 Gew.-%).

Die so hergestellte wässrige Lösung wir im Folgenden als Additiv **A3** bezeichnet.

### 2. Verwendete Mahlhilfsmittel

Folgende Mahlhilfsmittel oder Additve **A1 - A4** wurden für die Ausführungsbeispiele verwendet (Tabelle 1):

**Tabelle 1**

| **Bezeichnung** | **Zusammensetzung** |
|---|---|
| **A1** | Kammpolymer **KP1** (rein, pulverförmig) |
| **A2** | Sand (Korngrösse: 0.06 - 0.3 mm) |
| **A3** | Kammpolymer **KP2** (40-Gew.-% in H₂O) |
| **A4** | Diethanolamin (DEA) |

### 2. Herstellung von Abbindebeschleunigern

Zur Herstellung von erfindungsgemässen Abbindebeschleunigern auf Gipsbasis wurde Additiv **A1** als Mahlhilfsmittel beim Mahlen von Gips eingesetzt. Dabei wurden jeweils 200 g Gips (REA-Gips; Knauf) mit Additiv **A1** unter identischen Bedingungen auf Laborkugelmühlen gemahlen. Die Mahldauer und die Mühlendrahzahl wurden bei allen Mahlversuchen konstant gehalten. Die Dosierungen des Additivs **A1** sind in Tabelle 2 angegeben und beziehen sich jeweils auf die Menge an reinem Additiv bezogen auf die eingesetzte Menge an Gips. Die so hergestellten Abbindebeschleuniger werden mit **B1 - B7** bezeichnet. Als Referenz wurde zudem Abbindebeschleuniger **B0** aus reinem Gips, welcher ohne Additiv gemahlen wurde, hergestellt.

Nach erfolgtem Mahlvorgang wurde die Feinheit nach Blaine sowie der Siebrückstand der Partikel über 32 µm (in Gew.-% bezogen auf sämtliche Partikel) analog Norm EN 196-6 (Mai 2010) mit einem 32 µm Sieb bestimmt.

Die Parameter d⁵⁰ bzw. die Partikelgrössenverteilungen wurden zudem durch Lasergranulometrie in an sich bekannter Weise bestimmt.

Der Mahlgutertrag wurde durch Wägen bestimmt. Unter Berücksichtigung der ursprünglichen Einwaage wurde daraus die an den Kugeln der Laborkugelmühle angebackene oder verklebte Menge an Gips bestimmt.

Tabelle 2 gibt einen Überblick über die durchgeführten Mahlversuche und die entsprechenden Resultate.

**Tabelle 2**

| **Beschleuniger** | **B0** | **B1** | **B2** | **B3** | **B4** | **B5** | **B6** |
|---|---|---|---|---|---|---|---|
| Additiv | - | **A1** | **A1** | **A1** | **A1** | **A1** | **A1** |
| Dosierung [Gew.-%] | - | 0.050 | 0.250 | 0.500 | 1.000 | 2.500 | 5.000 |
| Mahlgutertrag [g] | 162 | 165 | 172 | 175 | 190 | 200 | 189 |
| Verklebung [g] | 38 | 35 | 28 | 25 | 10 | 0 | 11 |
| Feinheit [cm²/g] | 7030 | 7210 | 6790 | 6570 | 5620 | 2270 | 3190 |
| Siebrückstand > 32 µm [Gew.-%] | 51.6 | 51.0 | 53.5 | 53.4 | 59.3 | 81.3 | 76.4 |
| d⁵⁰ [µm] | 33.8 | 33.1 | 36.0 | 35.8 | 42.1 | 61.6 | 57.5 |

Zu Vergleichszwecken wurden auch Abbindebeschleunigern auf Gipsbasis unter Verwendung der Additive **A2 - A4** in analoger Weise hergestellt. Tabelle 3 gibt einen entsprechenden Überblick über die so hergestellten Abbindebeschleuniger **BV1 - BV4.** Das Verfahren zur Herstellung des Beschleunigers **BV3** entspricht dabei einer Nassmahlung, da das Mahlhilfsmittel in Form einer wässrigen Lösung (Additiv **A3**) eingesetzt wird.

**Tabelle 3**

| **Beschleuniger** | **B0** | **BV1** | **BV2** | **BV3** | **BV4** |
|---|---|---|---|---|---|
| Additiv | - | **A2** | **A2** | **A3** | **A4** |
| Dosierung [Gew.-%] | - | 0.500 | 5.000 | 0.250* | 0.500 |
| Mahlgutertrag [g] | 162 | 167 | 180 | 104 | 185 |
| Verklebung [g] | 38 | 33 | 20 | 96 | 15 |
| Feinheit [cm²/g] | 7030 | 6880 | 6350 | 5750 | 6180 |
| Siebrückstand > 32 µm [Gew.-%] | 51.6 | 52.6 | 54.7 | 57.6 | 54.9 |
| d⁵⁰ [µm] | 33.8 | 34.9 | 37.1 | 39.9 | 37.2 |

| | | | | | |
|---|---|---|---|---|---|
| ¹⁾ Bezogen auf den Gehalt an Kammpolymer in Additiv **A3** | | | | | |

Aus Tabelle 2 ist insbesondere ersichtlich, dass mit steigender Zugabemenge an Additiv **A1** bzw. Kammpolymer **KP1** die Verklebungen in der Mühle abnehmen. Dies trifft grundsätzlich auch für die Vergleichsversuche **BV1** und **BV2** mit Sand (Additiv **A2**) zu (siehe Tabelle 3). Jedoch sind die Verklebungen bei Verwendung von Additiv **A2** (Sand) bei entsprechender Dosierung deutlich höher als mit Additiv **A1.** Zudem ist bei der Mahlung von härteren Materialien wie Sand mit erhöhtem Verschleiss der Mahlkörper zu rechnen.

Im Hinblick auf den gesamten Mahlprozess sind Dosierungen des Additivs **A1** im Bereich von 0.050 - 5 Gew.-% (Beschleuniger **B1 - B4**) und im Besonderen Dosierungen des Additivs **A1** im Bereich von 0.250 - 1 Gew.-% (Beschleuniger **B1 - B3**) vorteilhaft.

Wird anstelle des pulverförmigen Kammpolymers **KP1** (Additiv **A1,** Beschleuniger **B2**) das Selbe aber in Wasser gelöste Kammpolymer in gleicher Konzentration beigegeben (Additiv **A3,** Beschleuniger **BV3**), so nimmt die Verklebung deutlich zu (Tabelle 3). Dies zeigt klar die Unterschiede zwischen Trocken- und Nassmahlung.

### 3. Gipsversuche

Ebenfalls untersucht wurde die Wirksamkeit der Abbindebeschleuniger **B0 - B6** und **BV1 - BV4** in Stuckgips. Hierfür wurde jeweils 200 g Stuckgips (Knauf) mit 140 g Wasser und 0.4 g des jeweiligen Abbindebeschleunigers in an sich bekannter Weise angemacht. Das Verhältnis von Wasser zu Bindemittel betrug konstant 0.7.

Unmittelbar nach dem Anmachen wurde das Ausbreitmass mittels Hohlzylinder (Durchmesser 50 mm, Höhe 50 mm) auf einer Glasplatte bestimmt. Der Versteifungsbeginn sowie das Versteifungsende wurden sodann mittels konventioneller Testmethoden (Messerschnitt- & Daumendruck-Methode) ermittelt.

Tabelle 4 gibt eine Übersicht über durchgeführte Versuche **G0 - G6** mit den Beschleunigern **B0 - B6.** Versuch **R** wurde ohne Beschleuniger durchgeführt und dient als Referenz.

**Tabelle 4**

| **Versuch** | **R** | **G0** | **G1** | **G2** | **G3** | **G4** | **G5** | **G6** |
|---|---|---|---|---|---|---|---|---|
| Beschleuniger | - | **B0** | **B1** | **B2** | **B3** | **B4** | **B5** | **B6** |
| Ausbreitmass | 180 | 167 | 154 | 157 | 158 | 164 | 187 | 188 |
| Versteifungsbeginn [min:s] | 9:20 | 3:10 | 2:55 | 2:45 | 2:45 | 2:50 | 3:40 | 3:55 |
| Versteifungsende [min:s] | 24:00 | 9:20 | 8:15 | 7:55 | 7:50 | 7:30 | 9:20 | 9:55 |

Tabelle 5 zeigt eine entsprechende Übersicht über durchgeführte Versuche **GV1 - GV4** mit den Beschleunigern **BV1 - BV4.**

**Tabelle 5**

| **Versuch** | **R** | **G0** | **GV1** | **GV2** | **GV3** | **GV4** |
|---|---|---|---|---|---|---|
| Beschleuniger | - | **B0** | **BV1** | **BV2** | **BV3** | **BV4** |
| Ausbreitmass | 180 | 167 | 165 | 159 | 170 | 172 |
| Versteifungsbeginn [min:s] | 9:20 | 3:10 | 3:15 | 3:15 | 4:00 | 3:40 |
| Versteifungsende [min:s] | 24:00 | 9:20 | 9:15 | 9:15 | 10:55 | 9:30 |

Aus Tabelle 4 ist zu entnehmen, dass sämtliche Beschleuniger **B0 - B6** gegenüber der Referenz **R** ohne Beschleuniger eine abbindebeschleunigende Wirkung zeigen. Besonders vorteilhaft sind die Beschleuniger **B1 - B4** (Versuche **G1 - G4**), welche mit Additiv **A1** in Dosierungen im Bereich von 0.050 - 1.000 Gew.-% hergestellt wurden. Diese Beschleuniger zeigen gegenüber der Referenz **B0** (Gips ohne Additiv gemahlen) eine klar verbesserte Beschleunigerwirkung.

Demgegenüber wird im Vergleichsversuch **GV3** mit dem nassgemahlenen Abbindebeschleniger **BV3** eine schlechtere Abbindebeschleunigung beobachtet. Dies trifft im Wesentlichen auch für die Versuche **GV1, GV2** und **GV4** mit Beschleuniger **BV1, BV2** und **BV4** zu.

Die vorstehend beschriebenen Ausführungsformen sind jedoch lediglich als illustrative Beispiele zu verstehen, welche im Rahmen der Erfindung beliebig abgewandelt werden können.

## Patentansprüche

1. Verfahren zur Herstellung eines Abbindebeschleunigers, insbesondere für Bindemittel auf Basis von Calciumsulfat, **dadurch gekennzeichnet, dass** Gips zusammen mit wenigstens einem Polycarboxylat einer Trockenmahlung unterzogen wird.

2. Verfahren nach Anspruch 1, **dadurch gekennzeichnet, dass** der Gips auf einen d⁵⁰-Wert der Partikelgrösse im Bereich ≤ 100 µm, insbesondere kleiner ≤ 70 µm, bevorzugt kleiner ≤ 40 µm, gemahlen wird.

3. Verfahren nach wenigstens einem der Ansprüche 1 - 2, **dadurch gekennzeichnet, dass** das Polycarboxylat mit einem Anteil von 0.05 - 10 Gew.-%, insbesondere 0.05 - 2 Gew.-%, speziell 0.2 - 1 Gew.-%, eingesetzt wird.

4. Verfahren nach wenigstens einem der Ansprüche 1 - 3, **dadurch gekennzeichnet, dass** ein Polycarboxylat in festem Aggregatzustand, insbesondere ein pulverförmiges Polycarboxylat, eingesetzt wird.

5. Verfahren nach wenigstens einem der Ansprüche 1 - 4, **dadurch gekennzeichnet, dass** das Polycarboxylat ein Kammpolymer ist, welches über einen Polycarboxylatrückgrat und Polyetherseitenketten verfügt, wobei die Polyetherseitenketten über Ester-, Ether- und/oder Amidgruppen an das Polycarboxylatrückgrat gebunden sind.

6. Verfahren nach wenigstens einem der Ansprüche 1 - 5, **dadurch gekennzeichnet, dass** das Polycarboxylat oder Kammpolymer folgende Teilstruktureinheiten umfasst oder daraus besteht:
a) a Molanteile einer Teilstruktureinheit **S1** der Formel (I) 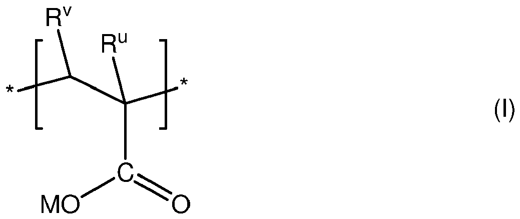
b) b Molanteilen einer Teilstruktureinheit **S2** der Formel (II) 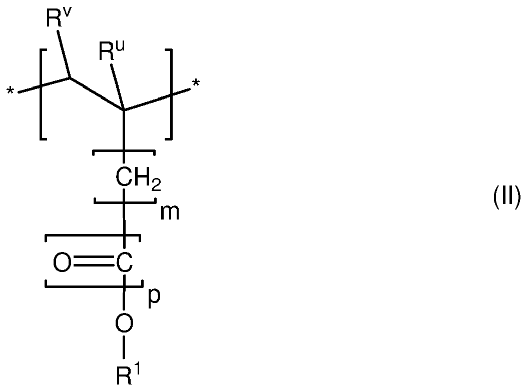
c) c Molanteilen einer Teilstruktureinheit **S3** der Formel (III) 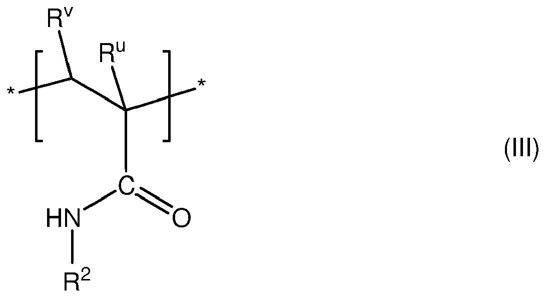
d) d Molanteilen einer Teilstruktureinheit **S4** der Formel (IV) 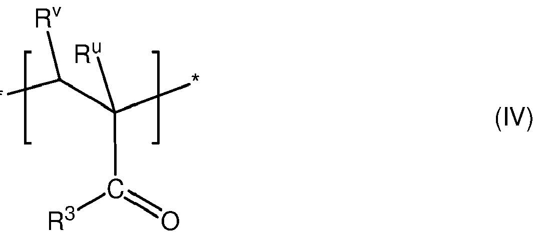 wobei
M unabhängig voneinander H⁺, ein Alkalimetallion, Erdalkalimetallion, ein zwei oder dreiwertiges Metallion, ein Ammoniumion oder eine organische Ammoniumgruppe darstellt,
jedes R^{u} unabhängig von den anderen für Wasserstoff oder eine Methylgruppe steht,
jedes R^{v} unabhängig von den anderen für Wasserstoff oder COOM steht, m = 0, 1 oder 2,
p = 0 oder 1,
R¹ und R² unabhängig voneinander für eine C₁- bis C₂₀-Alkylgruppe, -Cycloalkylgruppe, -Alkylarylgruppe oder für -[AO]ₙ-R⁴ steht,
wobei A = C₂- bis C₄-Alkylen, R⁴ für H, eine C₁- bis C₂₀-Alkylgruppe, -Cyclohexylgruppe oder -Alkylarylgruppe steht,
und n = 2 - 250,
R³ unabhängig voneinander für NH₂, -NR⁵R⁶, -OR⁷NR⁸R⁹ stehen,
wobei R⁵ und R⁶ unabhängig voneinander für
eine C₁- bis C₂₀-Alkylgruppe, -Cycloalkylgruppe -Alkylaryl¬gruppe oder -Arylgruppe stehen,
oder für eine Hydroxyalkylgruppe oder für eine Acetoxyethyl- (CH₃-CO-O-CH₂-CH₂-) oder eine Hydroxy-isopropyl-(HO-CH(CH₃)-CH₂-) oder eine Acetoxyisopropylgruppe (CH₃-CO-O-CH(CH₃)-CH₂-) stehen;
oder R⁵ und R⁶ bilden zusammen einen Ring, von dem der Stickstoff ein Teil ist, um einen Morpholin- oder Imidazolinring aufzubauen;
R⁷ eine C₂ -C₄-Alkylengruppe ist,
R⁸ und R⁹ je unabhängig voneinander eine C₁- bis C₂₀-Alkylgruppe, -Cycloalkylgruppe, -Alkylarygruppe, -Arylgruppe oder eine Hydroxyalkylgruppe darstellen,
und wobei a, b, c und d Molanteile der jeweiligen Teilstruktureinheiten **S1, S2, S3** und **S4** darstellen, mit a/b/c/d = (0.1 - 0.9) / (0.1 - 0.9) / (0 - 0.8) / (0 - 0.8),
insbesondere a/b/c/d = (0.3 - 0.9) / (0.1 - 0.7) / (0 - 0.6) / (0 - 0.4),
bevorzugt a/b/c/d = (0.5 - 0.9) / (0.1 - 0.3) / (0.001 - 0.005) / 0 und der Massgabe dass a + b + c + d = 1 ist.

7. Verfahren nach Anspruch 6, **dadurch gekennzeichnet, dass** im Polycarboxylat
a) die Reste R^{u} und R^{v} für Wasserstoff stehen,
b) m = 0 ist,
c) p = 1 ist,
d) R¹, R² und R³, jeweils unabhängig voneinander, für -[AO]ₙ-R⁴ mit n = 20 - 70 stehen und/oder
e) R⁴ eine Methylgruppe darstellt.

8. Verfahren nach wenigstens einem der Ansprüche 1 - 7, **dadurch gekennzeichnet, dass** wenigstens ein zusätzliches Mahlhilfsmittel eingesetzt wird, wobei insbesondere das zusätzliche Mahlhilfsmittel Zucker, Stärke, Quarzsand und/oder Dolomit umfasst.

9. Verfahren nach wenigstens einem der Ansprüche 1 - 8, **dadurch gekennzeichnet, dass** die Trockenmahlung in einer Mahlkörpermühle, insbesondere einer Kugelmühle, erfolgt.

10. Abbindebeschleuniger, insbesondere für Bindemittel auf Basis von Calciumsulfat, erhältlich durch ein Verfahren nach wenigstens einem der Ansprüche 1 - 9.

11. Verwendung eines Abbindebeschleunigers nach Anspruch 10 zur Beschleunigung des Abbindens eines Bindemittels auf Basis von Calciumsulfat, insbesondere Stuckgips.

12. Verwendung nach Anspruch 11 bei der Herstellung von Gipsplatten.

13. Bindemittelzusammensetzung enthaltend ein Bindemittel auf Basis von Calciumsulfat sowie einen Abbindebeschleuniger nach Anspruch 10.

14. Bindemittelzusammensetzung nach Anspruch 13, **dadurch gekennzeichnet, dass** der Abbindebeschleuniger mit einem Anteil von 0.0005 - 5 Gew.-%, insbesondere 0.01 - 1 Gew.-%, bezogen auf das Bindemittel vorliegt.

15. Formkörper, insbesondere eine Gipsplatte, enthaltend eine ausgehärtete Bindemittelzusammensetzung nach wenigstens einem der Ansprüche 13 - 14.
